# EUROPÄISCHE PATENTSCHRIFT

(11) **EP 1 856 429 B1**
(45) Veröffentlichungstag und Bekanntmachung des Hinweises auf die Patenterteilung: **08.07.2009**
(21) Anmeldenummer: 06707429.4
(22) Anmeldetag: 06.03.2006
(51) Int. Cl.: F16H 61/02

(54) **WÄHLSCHIEBER EINES HYDRAULISCHEN STEUERSYSTEMS EINES GETRIEBES EINES KRAFTFAHRZEUGS**
SELECTOR SLIDE OF A HYDRAULIC CONTROL SYSTEM OF A MOTOR VEHICLE TRANSMISSION
COULISSE DE SELECTION D'UN SYSTEME DE COMMANDE HYDRAULIQUE D'UNE TRANSMISSION DE VEHICULE

(30) Priorität: 11.03.2005 DE 102005011280
(43) Veröffentlichungstag der Anmeldung: 21.11.2007
(73) Patentinhaber: ZF Friedrichshafen AG, 88038 Friedrichshafen (DE)
(72) Erfinder: HABICH, Jörg-Uwe, 88045 Friedrichshafen (DE)
(86) Internationale Anmeldenummer: PCT/EP2006/002008
(87) Internationale Veröffentlichungsnummer: WO 2006/094731

(56) Entgegenhaltungen:
- US-A1- 2002 083 986
- PATENT ABSTRACTS OF JAPAN Bd. 017, Nr. 374 (M-1445), 14. Juli 1993 (1993-07-14) -& JP 05 060213 A (AISIN AW CO LTD), 9. März 1993 (1993-03-09)

## Beschreibung

Die vorliegende Erfindung betrifft einen Wählschieber eines hydraulischen Steuersystems eines Getriebes eines Kraftfahrzeugs gemäß dem Oberbegriff des Patentanspruchs 1.

Nach dem Stand der Technik wird bei Automatgetrieben die Bewegung des Schalthebels in eine Bewegung einer Rastenscheibe umgewandelt, deren Bewegung wiederum in einer Bewegung eines Wählschiebers des hydraulischen Steuersystems resultiert. Hierbei wird der Wählschieber mechanisch betätigt.

Üblicherweise erfolgt die mechanische Betätigung des Wählschiebers über die exzentrisch angeordnete Rastenscheibe bzw. über einen in der Rastenscheibe befestigten Pin, weicher in den als Mitnahmekopf ausgebildeten Wählschieberkopf eingreift. Hierbei wird die Rotationsbewegung der Rastenscheibe über den eine Kreisbahn beschreibenden Pin in eine translatorische Bewegung des Wählschiebers umgewandelt.

Nach dem Stand der Technik werden derartige Wählschieber als gegossene Schieber ausgeführt. Die Verfahrwege des Wählschiebers teilen sich in einen im Gehäuse geführten Anteil und einen außerhalb des Gehäuses geführten Anteil auf, wobei sich die Anteile an geführter und ungeführter Länge in Abhängigkeit von der Schaltstellung ändern.

Aus funktionellen Gründen darf ein Führungsabsatz am Wählschieber über den Schaltweg nicht ganz aus dem Gehäuse des Wählschiebers ausfahren, weil dies beim Wiedereintritt zu Verschleiß und Kantenbrüchen führen kann, da durch die Ansteuerung Querkräfte am Wählschieber entstehen.

Dies resultiert darin, dass die Führung des Wählschiebers im Wählschiebergehäuse entsprechend lang ausgeführt sein muss, was durch eine entsprechende Verlängerung des Gehäuses an der Betätigungsseite und/oder der Wählschieberseite erzielt werden kann. Hierbei entsteht der Nachteil, dass Bauraum erforderlich ist, der bei den Bauraumverhältnissen in Getrieben nicht immer zur Verfügung steht.

Das Dokument JP 05060213 A, das als nächstliegender Stand der Technik angesehen wird, offenbart einen in einem Wählschiebergehäuse geführten Wählschieber eines hydraulischen Steuersystems eines Automatgetriebes, der einen an einen Kolben angrenzenden Führungsabschnitt aufweist, welcher dazu dient, den Kolben beim Einführen in das Wählschiebergehäuse zu führen.

Der vorliegenden Erfindung liegt die Aufgabe zugrunde, einen Wählschieber eines hydraulischen Steuersystems eines Getriebes eines Kraftfahrzeugs anzugeben, bei dem die Führungslänge bei gleichbleibender Wählschieberlänge vergrößert wird. Zudem sollen bei der erfindungsgemäßen Konstruktion keine Nachteile bezüglich des hydraulischen Querschnitts entstehen. Ferner soll eine einfache und kostengünstige Fertigung ermöglicht werden.

Diese Aufgabe wird durch die Merkmale des Patentanspruchs 1 gelöst. Weitere erfindungsgemäße Ausgestaltungen und Vorteile gehen aus dem Unteranspruch hervor.

Demnach wird ein Wählschieber eines hydraulischen Steuersystems eines Getriebes eines Kraftfahrzeugs vorgeschlagen, bei dem eine Stützrippe angebracht ist, derart, dass die Führungslänge bei gleichbleibender Länge des Wählschiebergehäuses verlängert wird.

Gemäß der Erfindung weist der Querschnitt der Stützrippe eine Kreuz- oder Stemform auf. Sie kann bei symmetrisch und unsymmetrisch ausgebildeten gegossenen Wählschiebern angebracht werden.

Durch die erfindungsgemäße Konzeption kann ein Führungsabsatz vollständig aus dem Wählschiebergehäuse geführt werden. Zudem können Wählschiebergehäuse kleiner dimensioniert werden.

Im Rahmen einer besonders vorteilhaften Weiterbildung der Erfindung wird vorgeschlagen, die Formtrennung bei der Gusskonstruktion derart zu gestalten, dass in vorteilhafter Weise für die Gusskonstruktion nur zwei Formteile nötig sind, wodurch sich eine einfache und kostengünstige Fertigung des Wählschiebers ergibt.

Die Erfindung wird im Folgenden anhand der beigefügten Figuren beispielhaft näher erläutert. Es zeigen:
- Figur 1: eine schematische Darstellung möglicher Ausführungen des Querschnitts der erfindungsgemäßen Stützrippe;
- Figur 2: eine schematische Darstellung eines erfindungsgemäßen Wählschiebers mit exzentrischer Ansteuerung; und
- Figur 3: eine schematische Darstellung einer möglichen Formteilung bei der Gusskonstruktion für zwei mögliche Querschnittsfor- men der erfindungsgemäßen Stützrippe.

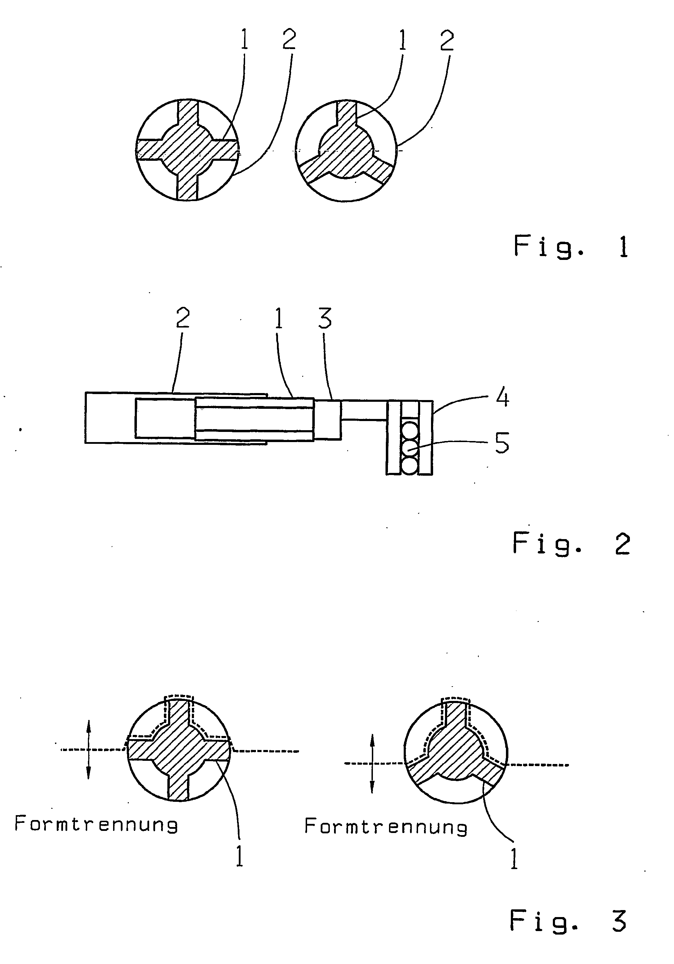

In Figur 1 sind zwei mögliche Ausführungen des Querschnitts der erfindungsgemäß am Wählschieber angebrachten Stützrippe 1 gezeigt. Im linken Teil der Figur 1 ist eine Stützrippe 1 mit einem kreuzförmigen und im rechten Teil der Figur 1 eine Stützrippe 1 mit einem sternförmigen Querschnitt gezeigt. Das Wählschiebergehäuse ist mit dem Bezugszeichen 2 bezeichnet.

Durch die Stützrippe wird eine Führung eines Führungsabsatzes 3 außerhalb des Gehäuses 2 ermöglicht. Dies wird anhand von Figur 2 veranschaulicht, welche einen Wählschieber zeigt, bei dem zur Ansteuerung ein in der Rastenscheibe des Getriebes befestigter Pin 5 in den als Mitnahmekopf ausgebildeten Wählschieberkopf 4 eingreift.

In vorteilhafter Weise kann der erfindungsgemäß ausgebildete Wählschieber durch eine Gusskonstruktion umfassend zwei Formteile hergestellt werden. Eine mögliche Formteilung wird anhand von Figur 3 veranschaulicht, wobei die gestrichelte Linie die zwei Formteile voneinander trennt. Hierbei ist im linken Teil der Figur 3 eine Stützrippe 1 mit einem kreuzförmigen und im rechten Teil der Figur 3 eine Stützrippe 1 mit einem sternförmigen Querschnitt gezeigt.

### Bezugszeichen

- 1: Stützrippe
- 2: Wählschiebergehäuse
- 3: Führungsabsatz
- 4: Wählschieberkopf
- 5: Pin der Rastenscheibe

## Patentansprüche

1. In einem Wählschiebergehäuse (2) geführter Wählschieber eines hydraulischen Steuersystems eines Getriebes eines Kraftfahrzeugs mit einem Führungsabsatz (3), wobei der Wählschieber angrenzend an den Führungsabsatz einen Abschnitt mit einem Querschnitt aufweist, der Stützrippen (1) bildet, welche zur Führung des Wählschiebers dienen in Wählschieberstellungen bei denen der Führungsabsatz aus dem Wählschiebergehäuse herausragt, **dadurch gekennzeichnet, dass** der Querschnitt kreuz- oder sternförmig ist.

2. Wählschieber nach Anspruch 1, **dadurch gekennzeichnet, dass** er durch eine Gusskonstruktion umfassend zwei Formteile herstellbar ist.

## Claims

1. Selector slide, which is guided in a selector slide housing (2), of a hydraulic control system of a transmission of a motor vehicle, having a guide projection (3), with the selector slide having, adjacent to the guide projection, a section with a cross section which forms support ribs (1) which serve to guide the selector slide in selector slide positions in which the guide projection projects out of the selector slide housing, **characterized in that** the cross section is cross-shaped or star-shaped.

2. Selector slide according to Claim 1, **characterized in that** said selector slide can be produced by means of a cast design comprising two moulded parts.

## Revendications

1. Coulisse de sélection d'un système de commande hydraulique d'une transmission de véhicule automobile guidée dans un boîtier de coulisse de sélection (2), comprenant un épaulement de guidage (3), la coulisse de sélection présentant, à côté de l'épaulement de guidage, une portion ayant une section transversale qui forme des nervures de support (1) qui servent au guidage de la coulisse de sélection, dans des positions de la coulisse de sélection dans lesquelles l'épaulement de guidage ressort du boîtier de la coulisse de sélection, **caractérisée en ce que** la section transversale est en forme de croix ou d'étoile.

2. Coulisse de sélection selon la revendication 1, **caractérisée en ce qu'**elle peut être fabriquée par une construction en fonte comprenant deux pièces moulées.
